# EUROPÄISCHE PATENTSCHRIFT

(11) **EP 3 150 814 B1**
(45) Veröffentlichungstag und Bekanntmachung des Hinweises auf die Patenterteilung: **28.08.2019**
(21) Anmeldenummer: 16002088.9
(22) Anmeldetag: 27.09.2016
(51) Int. Cl.: F01N 3/20, F01N 9/00, F01N 13/00, F01N 3/035

(54) **VERFAHREN ZUM BETREIBEN EINES ABGASNACHBEHANDLUNGSSYSTEMS**
METHOD FOR OPERATING A WASTE GAS TREATMENT SYSTEM
PROCÉDÉ DE FONCTIONNEMENT D'UN SYSTÈME DE TRAITEMENT AVAL DES GAZ D'ÉCHAPPEMENT

(30) Priorität: 01.10.2015 DE 102015012736
(43) Veröffentlichungstag der Anmeldung: 05.04.2017
(73) Patentinhaber: MAN Truck & Bus SE, 80995 München (DE)
(72) Erfinder: Lutz, Florian, 91522 Ansbach (DE); Rothe, Dieter, 90403 Nürnberg (DE)
(74) Vertreter: Liebl, Thomas

(56) Entgegenhaltungen:
- EP-A1- 2 873 823
- WO-A1-01/64319
- WO-A1-2004/061278
- WO-A1-2013/095214
- DE-A1-102004 036 036
- DE-A1-102014 001 880
- DE-A1-102015 000 955

## Beschreibung

Die Erfindung betrifft ein Verfahren zum Betreiben eines Abgasnachbehandlungssystems für eine Brennkraftmaschine, insbesondere für einen Dieselmotor, nach dem Oberbegriff des Patentanspruches 1, eine Vorrichtung nach dem Oberbegriff des Patentanspruches 13 sowie ein Fahrzeug, insbesondere ein Nutzfahrzeug, nach Patentanspruch 15, zur Durchführung des erfindungsgemäßen Verfahrens und/oder mit der erfindungsgemäßen Vorrichtung.

Es ist bekannt, an einem Abgasstrang eines Brennkraftmaschine einen Partikelfilter vorzusehen, mittels dem im Abgas der Brennkraftmaschine enthaltene Partikel, insbesondere Kohlenstoff-Partikel, aus dem Abgas herausgefiltert und gespeichert werden können. Die Regeneration eines derartigen Partikelfilters kann beispielsweise durch Verbrennung der in dem Partikelfilter gespeichertem Partikel erfolgen. Für diese Verbrennung sind hohe Temperaturen (etwa 600°C) erforderlich, die bei einer herkömmlichen Betriebsweise der Brennkraftmaschine, insbesondere eines Dieselmotors, regelmäßig nicht erreicht werden. Um die im Partikelfilter angesammelten Partikel dennoch verbrennen zu können, werden üblicherweise Maßnahmen ergriffen, mittels denen die Temperatur des Partikelfilters kurzzeitig erhöht wird. Derartige Maßnahmen können beispielsweise eine Erhöhung der Einspritzmenge, die Beheizung des Partikelfilters mittels einer Heizeinrichtung oder die Rückstauung von Abgas sein. Eine weitere bekannte Möglichkeit zur Regeneration eines Partikelfilters ist die kontinuierliche Regeneration (CRT: Continuous Regeneration Trap). Bei dieser Regeneration des Partikelfilters ist üblicherweise, in Abgas-Strömungsrichtung gesehen, stromauf des Partikelfilters ein Oxidationskatalysator in dem Abgasstrang angeordnet, mittels dem in dem Abgas des Dieselmotors enthaltene Stickstoffmonoxid zu Stickstoffdioxid umgewandelt wird. Das gebildete Stickstoffdioxid reagiert bereits bei geringen Abgastemperaturen (etwa 250°C) mit den in dem Partikelfilter gespeicherten Kohlenstoff-Partikel, wodurch der Partikelfilter regeneriert wird. Dies erfolgt üblicherweise nach folgender Reaktionsgleichung:

2 NO₂ + C → 2 NO + CO₂

Des Weiteren ist es auch bekannt, an einem Partikelfilter ein SCR-aktives katalytisches Material vorzusehen, mittels dem in dem Abgas der Brennkraftmaschine enthaltene Stickoxide mit Ammoniak als Reduktionsmittel reduziert werden können. Der Ammoniak wird üblicherweise in Form einer wässrigen Harnstofflösung ("AdBlue"), in Abgas-Strömungsrichtung gesehen, stromauf des Partikelfilters in den Abgasstrang eingeleitet. Die Reduktion der Stickoxide erfolgt üblicherweise nach den folgenden Reaktionsgleichungen:

4 NH₃ + 4 NO + O₂ → 4 N₂ + 6 H₂O

2 NH₃ + NO + NO₂ → 2 N₂ + 3 H₂O

4 NH₃ + 3 NO₂ → 3,5 N₂ + 6 H₂O

Wie aus den genannten Reaktionsgleichungen hervorgeht, kommt es bei einem Partikelfilter, der kontinuierlich regeneriert werden soll und ein SCR-katalytisches Material aufweist, zu einer Konkurrenzsituation bezüglich des in dem Abgas enthaltenen Stickstoffdioxids. Um einer derartigen Konkurrenzsituation entgegenzuwirken, ist es aus der DE 10 2014 001 880 A1 bekannt, in Abgas-Strömungsrichtung gesehen, stromab des Partikelfilters einen weiteren SCR-Katalysator anzuordnen und, in Abgas-Strömungsrichtung gesehen, zwischen dem Partikelfilter und dem weiteren SCR-Katalysator ebenfalls eine wässrige Harnstofflösung in den Abgasstrang einzuleiten. Dadurch kann die stromauf des Partikelfilters in den Abgasstrang eingeleitete Menge an wässriger Harnstofflösung derart verringert werden, dass die kontinuierliche Regeneration des Partikelfilters sichergestellt wird. Die gewünschte Reduzierung der in dem Abgas enthaltenen Stickoxide wird mittels der stromab des Partikelfilters und stromauf des weiteren SCR-Katalysators in den Abgasstrang eingeleiteten wässrigen Harnstofflösung sichergestellt.

Die DE 10 2015 000 955 A1 betrifft ein gattungsbildendes Verfahren zum Betreiben eines Abgasnachbehandlungssystems und eine gattungsbildende Vorrichtung zur Durchführung dieses Verfahrens. Insbesondere betrifft die DE 10 2015 000 955 A1 ein Verfahren zum Management von Niedrigtemperatur-NOₓ- und Niedrigtemperatur-HC-Emissionen einer Brennkraftmaschine, bei dem an einem Abgasstrang, in Abgas-Strömungsrichtung gesehen, eine erste Reduktionsmitteleinspritzdüse, eine DPF-SCR-Einrichtung, eine zweite Reduktionsmitteleinspritzdüse und ein SCR-Katalysatorelement vorgesehen sind.

Aufgabe der Erfindung ist es, ein Verfahren zum Betreiben eines Abgasnachbehandlungssystems für eine Brennkraftmaschine, insbesondere für einen Dieselmotor, sowie eine Vorrichtung bereitzustellen, mittels denen die Effizienz der Abgasnachbehandlung auf effektive Weise erhöht wird.

Diese Aufgabe wird gelöst mit den Merkmalen der unabhängigen Patentansprüche.

Gemäß Patentanspruch 1 wird ein Verfahren zum Betreiben eines Abgasnachbehandlungssystems für eine Brennkraftmaschine, insbesondere für einen Dieselmotor, vorgeschlagen, wobei ein Abgasstrang mit wenigstens einem SCR-Partikelfilter vorgesehen ist, wobei mittels des SCR-Partikelfilters in einen Abgas der Brennkraftmaschine enthaltene Partikel, insbesondere Kohlenstoff-Partikel, aus dem Abgas herausgefiltert und gespeichert werden können, wobei mittels des SCR-Partikelfilters in dem Abgas der Brennkraftmaschine enthaltene Stickoxide mit Ammoniak als Reduktionsmittel reduziert werden können, wobei eine erste Reduktionsmittel-Zuführeinrichtung vorgesehen ist, mittels der das Reduktionsmittel, insbesondere in Form einer wässrigen Harnstofflösung, in Abgas-Strömungsrichtung gesehen, stromauf des SCR-Partikelfilters in den Abgasstrang eingeleitet werden kann, wobei der SCR-Partikelfilter mit Stickstoffdioxid als Oxidationsmittel kontinuierlich regeneriert werden kann, wobei stromab des SCR-Partikelfilters wenigstens ein SCR-Katalysatorelement in oder an dem Abgasstrang angeordnet ist, mittels dem ebenfalls in dem Abgas der Brennkraftmaschine enthaltene Stickoxide mit Ammoniak als Reduktionsmittel reduziert werden können, und wobei eine zweite Reduktionsmittel-Zuführeinrichtung vorgesehen ist, mittels der das Reduktionsmittel, insbesondere ebenfalls in Form einer wässrigen Harnstofflösung, stromab des SCR-Partikelfilters und stromauf des SCR-Katalysatorelements in den Abgasstrang eingeleitet werden kann. Erfindungsgemäß ist ein Steuergerät vorgesehen, mittels dem die mittels der ersten Reduktionsmittel-Zuführeinrichtung in den Abgasstrang eingeleitete Reduktionsmittel-Menge in Abhängigkeit von der Temperatur des SCR-Partikelfilters geregelt und/oder gesteuert wird.

Auf diese Weise wird die Effizienz der Abgasnachbehandlung effektiv verbessert, da erfindungsgemäß die mittels der ersten Reduktionsmittel-Zuführeinrichtung in den Abgasstrang eingeleitete Reduktionsmittel-Menge nun in Abhängigkeit von der Temperatur des SCR-Partikelfilters verstellt bzw. geändert wird. Ebenso kann die mittels der zweiten Reduktionsmittel-Zuführeinrichtung in den Abgasstrang eingeleitete Reduktionsmittel-Menge nun in Abhängigkeit von der Temperatur des SCR-Partikelfilters verstellt bzw. geändert werden. Die Temperatur des SCR-Partikelfilters hat einen großen Einfluss auf die SCR-katalytische Wirkung und die kontinuierliche Regeneration des SCR-Partikelfilters und stellt einen wesentlichen Parameter dar, mit dem das System bzw. die Zuführung des Reduktionsmittels in den Abgasstrang optimiert werden kann. Mittels dieses Parameters kann die gewünschte kontinuierliche Regeneration des SCR-Partikelfilters sowie die gewünschte Verringerung der in dem Abgas der Brennkraftmaschine enthaltenen Stickoxide bei gleichzeitiger Minimierung der in den Abgasstrang eingeleiteten Menge an Reduktionsmittel erreicht werden. Durch einen geringen Verbrauch von Reduktionsmittel werden die Betriebskosten des Abgasnachbehandlungssystems gesenkt und, sofern das Abgasnachbehandlungssystem an einem Fahrzeug vorgesehen ist, die Reichweite des Fahrzeugs erhöht.

Die Temperatur des SCR-Partikelfilters kann dabei beispielsweise mittels eines ersten, stromauf des SCR-Partikelfilters und mittels eines zweiten, stromab des Partikelfilters in oder an dem Abgasstrang vorgesehenen Temperatursensors, insbesondere eines Thermoelements, zur Messung der Abgastemperatur erfolgen, aus deren Messwerten mittels des Steuergeräts die Temperatur des SCR-Partikelfilters ermittelt wird.

Des Weiteren ist die Begrifflichkeit "Abgasstrang" hier ausdrücklich in einem weitem Sinne zu verstehen. So umfasst der Abgasstrang hier sämtliche von dem Abgas der Brennkraftmaschine durchströmten Bereiche und Bauteile.

In der erfindungsgemäßen Verfahrensführung wird, sofern die aktuelle Temperatur des SCR-Partikelfilters einen definierten Partikelfilter-Temperaturwert unterschreitet, mittels der ersten Reduktionsmittel-Zuführeinrichtung kein Reduktionsmittel in den Abgasstrang eingeleitet. Sofern die aktuelle Temperatur des SCR-Partikelfilters den definierten Partikelfilter-Temperaturwert überschreitet, wird dann erfindungsgemäß mittels der ersten Reduktionsmittel-Zuführeinrichtung eine definierte Reduktionsmittel-Menge in den Abgasstrang eingeleitet werden. Auf diese Weise wird mittels der ersten Reduktionsmittel-Zuführeinrichtung beispielsweise erst dann Reduktionsmittel in den Abgasstrang eingeleitet, wenn der SCR-Partikelfilter eine ausreichend hohe SCR-katalytische Wirkung aufweist.

Erfindungsgemäß ist der definierte Partikelfilter-Temperaturwert geringer als eine SCR-Anspringtemperatur des SCR-Partikelfilters, ab der mittels des SCR-Partikelfilters in dem Abgas enthaltene Stickoxide effektiv reduziert werden können. Dadurch wird zuverlässig sichergestellt, dass bei einem Erreichen der SCR-Anspringtemperatur des SCR-Partikelfilters bereits eine ausreichende Menge von Reduktionsmittel am SCR-Partikelfilter vorhanden ist, um die durch den SCR-Partikelfilter strömenden Stickoxide zu reduzieren. Bevorzugt ist dabei vorgesehen, dass die SCR-Anspringtemperatur des SCR-Partikelfilters in einem Temperaturbereich von 220°C bis 250°C liegt.

In einer weiteren bevorzugten Verfahrensführung wird mittels des Steuergeräts die mittels der ersten Reduktionsmittel-Zuführeinrichtung in den Abgasstrang eingeleitete Reduktionsmittel-Menge und/oder die mittels der zweiten Reduktionsmittel-Zuführeinrichtung in den Abgasstrang eingeleitete Reduktionsmittel-Menge zusätzlich auch in Abhängigkeit von der Temperatur des SCR-Katalysatorelements geregelt und/oder gesteuert. Auf diese Weise kann die Effizienz der Abgasnachbehandlung weiter erhöht werden. Die Temperatur des SCR-Katalysatorelements kann ebenfalls mittels eines ersten, stromauf des SCR-Partikelfilters und mittels eines zweiten, stromab des SCR-Katalysatorelements in oder an dem Abgasstrang vorgesehenen Temperatursensors, insbesondere eines Thermoelements, zur Messung der Abgastemperatur erfolgen, aus deren Messwerten mittels des Steuergeräts die Temperatur des SCR-Katalysatorelements ermittelt wird.

Vorzugsweise wird dabei, sofern die aktuelle Temperatur des SCR-Katalysatorelements einen definierten Katalysatorelement-Temperaturwert unterschreitet, mittels der zweiten Reduktionsmittel-Zuführeinrichtung kein Reduktionsmittel in den Abgasstrang eingeleitet. Sofern die aktuelle Temperatur des SCR-Partikelfilters den definierten Katalysatorelement-Temperaturwert überschreitet, kann dann mittels der zweiten Reduktionsmittel-Zuführeinrichtung eine definierte Reduktionsmittel-Menge in den Abgasstrang eingeleitet werden. Dadurch kann beispielsweise erst dann Reduktionsmittel in den Abgasstrang eingeleitet werden, wenn das SCR-Katalysatorelement eine ausreichend hohe SCR-katalytische Wirkung aufweist. So kann Reduktionsmittel eingespart und einer Strömung von unverbrauchtem Ammoniak aus dem Abgasstrang bzw. in die freie Umgebung entgegengewirkt werden.

Grundsätzlich kann auch der definierte Katalysator-Temperaturwert gleich bzw. identisch mit der SCR-Anspringtemperatur des SCR-Katalysatorelements ausgebildet sein. Bevorzugt ist es jedoch, wenn der definierte Katalysatorelement-Temperaturwert ebenfalls geringer ist als die SCR-Anspringtemperatur, ab der mittels des SCR-Katalysatorelements in dem Abgas enthaltene Stickoxide reduzierbar sind. Dadurch wird ebenfalls eine Reduzierung der Stickoxide mittels des SCR-Katalysatorelements sichergestellt, wenn das SCR-Katalysatorelement seine SCR-Anspringtemperatur erreicht. Bevorzugt ist dabei vorgesehen, dass die SCR-Anspringtemperatur des SCR-Katalysatorelements in einem Temperaturbereich von 220°C bis 250°C liegt.

Besonders bevorzugt liegt der definierte Partikelfilter-Temperaturwert und/oder der definierte Katalysatorelement-Temperaturwert in einem Temperaturbereich von 150°C bis 190°C. Mittels eines derartigen Temperaturbereichs wird eine besonders effiziente Verwendung des Reduktionsmittels sichergestellt.

Weiter bevorzugt wird, sofern die aktuelle Temperatur des SCR-Partikelfilters den definierten Partikelfilter-Temperaturwert überschreitet und die aktuelle Temperatur des SCR-Katalysatorelements den definierten Katalysator-Temperaturwert unterschreitet, eine derartige Menge an Reduktionsmittel mittels der ersten Reduktionsmittel-Zuführeinrichtung in den Abgasstrang eingeleitet, dass im Bereich der ersten Reduktionsmittel- Zuführeinrichtung ein im Wesentlichen stöchiometrisches Reduktionsmittel-Stickoxid-Verhältnis vorhanden ist. Dadurch kann mittels des SCR-Partikelfilters eine große Menge an in dem Abgas enthaltenen Stickoxiden reduziert werden, wenn das SCR-Katalysatorelement noch nicht seine Betriebstemperatur aufweist. Zudem wird mittels einer derartigen Menge an Reduktionsmittel einer Ablagerung von wässriger Harnstofflösung in dem Abgasstrang entgegengewirkt. Alternativ zu dieser stöchiometrischen Einleitung von Reduktionsmittel kann auch vorgesehen sein, dass eine derartige Menge an Reduktionsmittel mittels der ersten Reduktionsmittel-Zuführeinrichtung in den Abgasstrang eingeleitet wird, dass im Bereich der ersten Reduktionsmittel-Zuführeinrichtung eine größere Reduktionsmittel-Menge vorhanden ist, als für ein stöchiometrisches Reduktionsmittel-Stickoxid-Verhältnis erforderlich ist. Dadurch kann eine besonders große Menge an Stickoxiden mittels des SCR-Partikelfilters reduziert werden.

Vorzugsweise wird, sofern die aktuelle Temperatur des SCR-Partikelfilters den definierten Partikelfilter-Temperaturwert überschreitet und die aktuelle Temperatur des SCR-Katalysatorelements den definierten Katalysator-Temperaturwert überschreitet, eine derartige Menge an Reduktionsmittel mittels der ersten Reduktionsmittel-Zuführeinrichtung in den Abgasstrang eingeleitet, dass im Bereich der ersten Reduktionsmittel-Zuführeinrichtung eine geringere Reduktionsmittel-Menge vorhanden ist, als für ein stöchiometrisches Reduktionsmittel-Stickoxid-Verhältnis erforderlich ist. Auf diese Weise wird sichergestellt, dass der SCR-Partikelfilter kontinuierlich regeneriert wird. Bevorzugt ist dabei vorgesehen, dass mittels der ersten Reduktionsmittel-Zuführeinrichtung eine derartige Menge an Reduktionsmittel in den Abgasstrang eingeleitet wird, dass im Bereich der ersten Reduktionsmittel-Zuführeinrichtung 50% bis 80% der für ein stöchiometrisches Reduktionsmittel-Stickoxid-Verhältnis erforderlichen Reduktionsmittel-Menge vorhanden sind. Dadurch werden eine effektive kontinuierliche Regeneration des SCR-Partikelfilters sowie gleichzeitig auch eine effektive Reduzierung der im Abgas enthaltenen Stickoxide mittels des SCR-Partikelfilters gewährleistet.

Weiter bevorzugt wird, sofern die aktuelle Temperatur des SCR-Partikelfilters den definierten Partikelfilter-Temperaturwert überschreitet und die aktuelle Temperatur des SCR-Katalysatorelements den definierten Katalysatorelement-Temperaturwert überschreitet, eine derartige Menge an Reduktionsmittel mittels der zweiten Reduktionsmittel-Zuführeinrichtung in den Abgasstrang eingeleitet, dass im Bereich der zweiten Reduktionsmittel-Zuführeinrichtung ein im Wesentlichen stöchiometrisches Reduktionsmittel-Stickoxid-Verhältnis vorhanden ist. Auf diese Weise wird mittels des SCR-Katalysatorelements eine große Menge an in dem Abgas der Brennkraftmaschine enthaltenen Stickoxiden reduziert. Zudem wird mittels einer derartigen Menge an Reduktionsmitteln einer Ablagerung von wässriger Harnstofflösung in dem Abgasstrang entgegengewirkt. Alternativ könnte aber auch vorgesehen sein, dass eine derartige Menge an Reduktionsmitteln mittels der zweiten Reduktionsmittel-Zuführeinrichtung in den Abgasstrang eingeleitet wird, dass im Bereich der zweiten Reduktionsmittel-Zuführeinrichtung eine größere Reduktionsmittel-Menge vorhanden ist, als für ein stöchiometrisches Reduktionsmittel-Stickoxid-Verhältnis erforderlich ist. Dadurch kann eine besonders große Menge an Stickoxiden mittels des SCR-Katalysatorelements reduziert werden.

In einer bevorzugten Ausgestaltung ist stromauf des SCR-Partikelfilters wenigstens ein Oxidationskatalysator in oder an dem Abgasstrang angeordnet, mittels dem in dem Abgas der Brennkraftmaschine enthaltenes Stickstoffmonoxid zu Stickstoffdioxid oxidiert werden kann. Mittels eines derartigen Oxidationskatalysators wird die kontinuierliche Regeneration des SCR-Partikelfilters zuverlässig sichergestellt.

Weiter bevorzugt ist wenigstens ein Stickoxid-Speicherelement in oder an dem Abgasstrang angeordnet, mittels dem in dem Abgas enthaltene Stickoxide in Abhängigkeit von der Abgastemperatur gespeichert und freigegeben werden. Bevorzugt ist dabei vorgesehen, dass das Stickoxid-Speicherelement die in dem Abgas enthaltenen Stickoxide speichert, wenn die Temperatur des Stickoxid-Speicherelements einen definierten Temperatur-Grenzwert unterschreitet. Sofern das Stickoxid-Speicherelement den definierten Temperatur-Grenzwert überschreitet, kann das Stickoxid-Speicherelement die gespeicherten Stickoxide dann wieder freigeben. Bevorzugt liegt der Temperatur-Grenzwert dabei in einem Bereich von 100°C bis 200°C, besonders bevorzugt in einem Bereich von 180°C bis 200°C. Mittels eines derartigen Stickoxid-Speicherelements wird erreicht, dass in dem Abgas der Brennkraftmaschine enthaltene Stickoxide zunächst eingespeichert werden, wenn der SCR-Partikelfilter und/oder das wenigstens eine SCR-Katalysatorelement noch nicht ihre Betriebstemperatur aufweisen. Erreichen der SCR-Partikelfilter und/oder das SCR-Katalysatorelement ihre Betriebstemperatur, werden die gespeicherten Stickoxide wieder freigegeben und mittels des SCR-Partikelfilters und/oder des SCR-Katalysatorelements reduziert. Bevorzugt ist dabei vorgesehen, dass das Stickoxid-Speicherelement als Speichermaterial Bariumnitrat und/oder Ceroxyd enthält. Das Stickoxid-Speicherelement kann beispielsweise stromauf des SCR-Partikelfilters und/oder eines Oxidationskatalysators in oder an dem Abgasstrang angeordnet sein. Alternativ und/oder zusätzlich kann das Stickoxid-Speicherelement beispielsweise auch direkt an dem SCR-Partikelfilter und/oder an dem Oxidationskatalysator vorgesehen ist.

Vorzugsweise enthält der SCR-Partikelfilter und/oder das SCR-Katalysatorelement als SCRwirksames Katalysatormaterial Kupfer und/oder Vanadium und/oder wenigstens ein Zeolith-Material. Mittels eines derartigen Katalysatormaterials wird eine besonders effektive Reduzierung der in dem Abgas enthaltene Stickoxide gewährleistet.

Zur Lösung der bereits genannten Aufgabe wird ferner eine Vorrichtung mit den Merkmalen des Anspruchs 13 beansprucht. Die erfindungsgemäße Vorrichtung weist eine Brennkraftmaschine, insbesondere mit einem Dieselmotor, und einen Abgasstrang auf, wobei der Abgasstrang wenigstens einen SCR-Partikelfilter aufweist, mittels dem in einem Abgas der Brennkraftmaschine enthaltene Partikel, insbesondere Kohlenstoff-Partikel, aus dem Abgas herausgefiltert und gespeichert werden können, wobei mittels des SCR-Partikelfilters in dem Abgas der Brennkraftmaschine enthaltene Stickoxide mit Ammoniak als Reduktionsmittel reduziert werden können, wobei eine erste Reduktionsmittel-Zuführeinrichtung vorgesehen ist, mittels der das Reduktionsmittel, insbesondere in Form einer wässrigen Harnstofflösung, in Abgas-Strömungsrichtung gesehen, stromauf des SCR-Partikelfilters in den Abgasstrang eingeleitet werden kann, wobei der SCR-Partikelfilter mit Stickstoffdioxid als Oxidationsmittel kontinuierlich regeneriert werden kann, wobei stromab des SCR-Partikelfilters wenigstens ein SCR-Katalysatorelement in oder an dem Abgasstrang angeordnet ist, mittels dem ebenfalls in dem Abgas der Brennkraftmaschine enthaltene Stickoxide mit Ammoniak als Reduktionsmittel reduziert werden können, und wobei eine zweite Reduktionsmittel-Zuführeinrichtung vorgesehen ist, mittels der das Reduktionsmittel, insbesondere ebenfalls in Form einer wässrigen Harnstofflösung, stromab des SCR-Partikelfilters und stromauf des SCR-Katalysatorelements in den Abgasstrang eingeleitet werden kann. Erfindungsgemäß ist ein Steuergerät vorgesehen, mittels dem die mittels der ersten Reduktionsmittel-Zuführeinrichtung in den Abgasstrang eingeleitete Reduktionsmittel-Menge in Abhängigkeit von der Temperatur des SCR-Partikelfilters geregelt und/oder gesteuert werden kann.

Die sich durch die erfindungsgemäße Vorrichtung ergebenden Vorteile sind identisch mit den bereits gewürdigten Vorteilen der erfindungsgemäßen Verfahrensführung, so dass diese an dieser Stelle nicht wiederholt werden.

Des Weiteren wird auch ein Fahrzeug, insbesondere ein Nutzfahrzeug, zur Durchführung des erfindungsgemäßen Verfahrens und/oder mit der erfindungsgemäßen Vorrichtung beansprucht. Die sich hieraus ergebenden Vorteile sind ebenfalls identisch mit den bereits gewürdigten Vorteilen des erfindungsgemäßen Verfahrens und werden an dieser Stelle ebenfalls nicht wiederholt. Alternativ zu dem Fahrzeug kann die Vorrichtung natürlich aber auch stationär bzw. ortsfest ausgebildet sein.

Die vorstehend erläuterten und/oder in den Unteransprüchen wiedergegebenen vorteilhaften Aus- und/oder Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Seitenansicht einen Lastkraftwagen mit der erfindungsgemäßen Vorrichtung;
- Fig. 2: eine Darstellung, anhand der der Aufbau der erfindungsgemäßen Vorrichtung erläutert wird;
- Fig. 3: ein Diagramm, anhand dem das erfindungsgemäße Verfahren erläutert wird; und
- Fig. 4: ein Diagramm, anhand dem der Ablauf des erfindungsgemäßen Verfahrens erläutert wird.

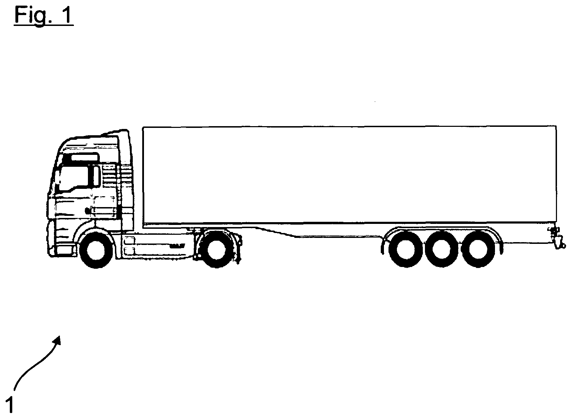

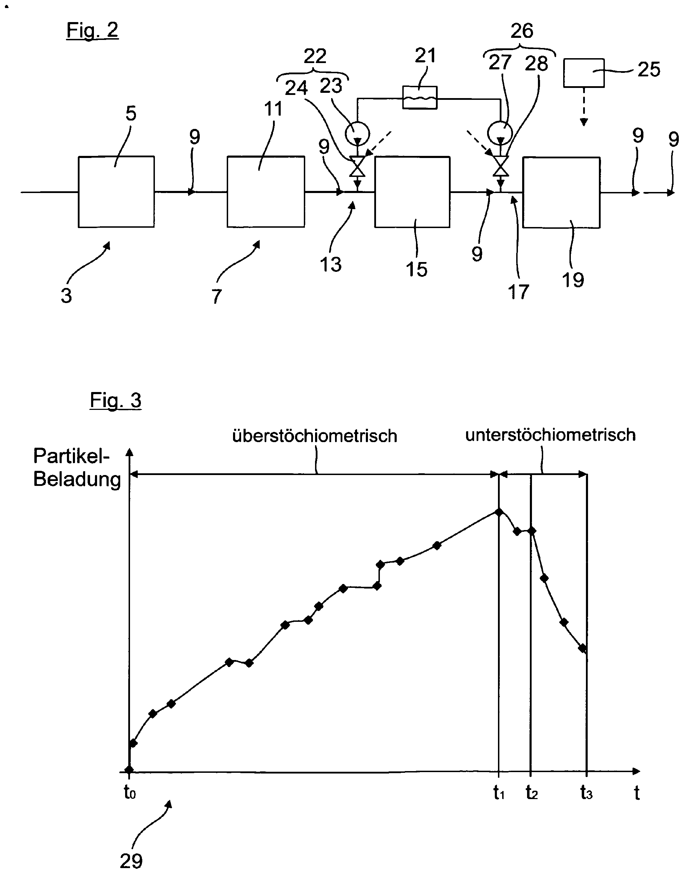

In Fig. 1 ist ein hier beispielhaft als Lastkraftwagen ausgebildetes Fahrzeug 1 mit der erfindungsgemäßen Vorrichtung 3 (Fig. 2) gezeigt. Der Aufbau der Vorrichtung 3 wird nachfolgend anhand von Fig. 2 näher erläutert:
Wie in Fig. 2 gezeigt ist, weist die Vorrichtung 3 eine Brennkraftmaschine 5 als Antriebseinrichtung für das Fahrzeug 1 und einen sich an die Brennkraftmaschine 5 anschließenden Abgasstrang 7 auf, der von einem Abgas 9 der Brennkraftmaschine 5 durchströmt wird. Der Abgasstrang 7 weist hier, in Abgas-Strömungsrichtung gesehen, einen Oxidationskatalysator 11, einen ersten Reduktionsmittel-Einleitbereich 13, einen SCR-Partikelfilter 15, einen zweiten Reduktionsmittel-Einleitbereich 17 sowie ein SCR-Katalysatorelement 19 auf.

Ausgehend von der Brennkraftmaschine 5 strömt das Abgas 9 zunächst durch den Oxidationskatalysator 11, mittels dem in dem Abgas 9 enthaltenes Stickstoffmonoxid teilweise zu Stickstoffdioxid oxidiert wird. Anschließend strömt das Abgas 9 an dem ersten Reduktionsmittel-Einleitbereich 13 vorbei, an dem ein Reduktionsmittel zur Reduzierung der in dem Abgas 9 enthaltenen Stickoxide, hier beispielhaft in Form einer wässrigen Harnstofflösung, in den Abgasstrang 7 eingeleitet werden kann. Die wässrige Harnstofflösung ist hier in einem Harnstoff-Tank 21 der Vorrichtung 3 gespeichert und wird mittels einer ersten Reduktionsmittel-Zuführeinrichtung 22 in den Abgasstrang 7 eingeleitet. Die Reduktionsmittel-Zuführeinrichtung 22 weist hier beispielhaft eine Pumpe 23 und ein Durchgangsventil 24 auf. Das Durchgangsventil 24 ist hier signaltechnisch mit einem Steuergerät 25 verbunden, mittels dem das Durchgangsventil 24 und somit die an dem ersten Reduktionsmittel-Einleitbereich 13 in den Abgasstrang 7 eingeleitete Menge an wässriger Harnstofflösung geregelt bzw. gesteuert wird.

Anschließend strömt das Abgas 9 durch den SCR-Partikelfilter 15, mittels dem in dem Abgas 9 der Brennkraftmaschine 5 enthaltene Partikel, insbesondere Kohlenstoff-Partikel, aus dem Abgas 9 herausgefiltert und gespeichert werden. Die Regeneration des SCR-Partikelfilters 15 erfolgt hier kontinuierlich mittels des durch den Oxidationskatalysator 11 gebildeten Stickstoffdioxids. Als zusätzliche Maßnahme zur Regeneration des SCR-Partikelfilters 15 könnten die in dem SCR-Partikelfilter 15 angesammelten Partikel auch zu definierten Zeitpunkten verbrannt werden. Die Zeitpunkte können dabei beispielsweise durch definierte Zeitintervalle festgesetzt sein oder durch Ermittlung der aktuellen Speicherfähigkeit des SCR-Partikelfilters 15 bestimmt werden. Zur Verbrennung der Partikel kann beispielsweise eine erhöhte Menge an Kraftstoff eingespritzt, der Partikelfilter aufgeheizt oder Abgas rückgestaut werden. Des Weiteren weist der SCR-Partikelfilter 15 auch ein SCR-katalytisches Material auf, mittels dem in dem Abgas 9 der Brennkraftmaschine 5 enthaltene Stickoxide mit Ammoniak als Reduktionsmittel reduziert werden können. Das Ammoniak wird in Form der wässrigen Harnstofflösung mittels der Reduktionsmittel-Zuführeinrichtung 22 in den Abgasstrang eingeleitet. Der SCR-Partikelfilter 15 weist bevorzugt Kupfer und/oder Vanadium und/oder wenigstens einen Zeolith als SCR-katalytisches Material auf.

Ausgehend von dem SCR-Partikelfilter 15 strömt das Abgas 9 der Brennkraftmaschine 5 an dem zweiten Reduktionsmittel-Einleitbereich 17 vorbei, an dem die in dem Harnstoff-Tank 21 gespeicherte wässrige Harnstofflösung ebenfalls in den Abgasstrang 7 eingeleitet werden kann. Die wässrige Harnstofflösung wird hier mittels einer zweiten Reduktionsmittel-Zuführeinrichtung 26 in den Abgasstrang 7 eingeleitet. Die zweite Reduktionsmittel-Zuführeinrichtung 26 weist hier beispielhaft ebenfalls eine Pumpe 27 und ein Durchgangsventil 28 auf. Das Durchgangsventil 28 ist hier ebenfalls signaltechnisch mit dem Steuergerät 25 verbunden, mittels dem das Durchgangsventil 28 und somit die an dem zweiten Reduktionsmittel-Einleitbereich 17 in den Abgasstrang 7 eingeleitete Menge an wässriger Harnstofflösung geregelt bzw. gesteuert wird.

Schließlich strömt das Abgas 9 der Brennkraftmaschine 5 durch das SCR-Katalysatorelement 19, mittels dem ebenfalls in dem Abgas 9 der Brennkraftmaschine enthaltene Stickoxide mit Ammoniak als Reduktionsmittel reduziert werden können. Der hierzu erforderliche Ammoniak wird mittels der Reduktionsmittel-Zuführeinrichtung 22 und/oder mittels der Reduktionsmittel-Zuführeinrichtung 26 in den Abgasstrang 7 eingeleitet. Das SCR-Katalysatorelement 19 weist ebenfalls bevorzugt Kupfer und/oder Vanadium und/oder wenigstens einen Zeolith als SCR-katalytisches Material auf.

In Fig. 3 ist ein Diagramm 29 gezeigt, aus dem die Beladung des SCR-Partikelfilters 15 in Abhängigkeit von der mittels der Reduktionsmittel-Zuführeinrichtung 22 in den Abgasstrang 7 eingeleiteten Menge an wässriger Harnstofflösung hervorgeht. Von einem Zeitpunkt t₀ bis zu einem Zeitpunkt t₁ wird mittels der Reduktionsmittel-Zuführeinrichtung 22 eine derartige Menge an wässriger Harnstofflösung in den Abgasstrang 7 eingeleitet, dass an dem ersten Reduktionsmittel-Einleitbereich 13 eine größere Reduktionsmittel-Menge vorhanden ist, als es für ein stöchiometrisches Reduktionsmittel-Stickoxid-Verhältnis erforderlich ist. Vom Zeitpunkt t₁ bis zu einem Zeitpunkt t₃ wird mittels der Reduktionsmittel-Zuführeinrichtung 22 eine derartige Menge an wässriger Harnstofflösung in den Abgasstrang 7 eingeleitet, dass an dem ersten Reduktionsmittel-Einleitbereich 13 eine geringere Reduktionsmittel-Menge vorhanden ist, als es für ein stöchiometrisches Reduktionsmittel-Stickoxid-Verhältnis erforderlich ist. Zwischen dem Zeitpunkt t₁ und einem Zeitpunkt t₂ wird dabei mittels der Reduktionsmittel-Zuführeinrichtung 22 eine derartige Menge an wässriger Harnstofflösung in den Abgasstrang 7 eingeleitet, dass an dem ersten Reduktionsmittel-Einleitbereich 13 80% der Reduktionsmittel-Menge vorhanden ist, die für ein stöchiometrisches Reduktionsmittel-Stickoxid-Verhältnis erforderlich ist. Zwischen dem Zeitpunkt t₂ und dem Zeitpunkt t₃ wird mittels der Reduktionsmittel-Zuführeinrichtung 22 eine derartige Menge an wässriger Harnstofflösung in den Abgasstrang 7 eingeleitet, dass an dem ersten Reduktionsmittel-Einleitbereich 13 50% der Reduktionsmittel-Menge vorhanden ist, die für ein stöchiometrisches Reduktionsmittel-Stickoxid-Verhältnis erforderlich ist.

Aus dem Diagramm 29 ist ersichtlich, dass die Beladung des SCR-Partikelfilters 15 mit Partikeln zunimmt, wenn mittels der Reduktionsmittel-Zuführeinrichtung 22 eine überstöchiometrische Menge an wässriger Harnstofflösung in den Abgasstrang 7 eingeleitet wird. Die Ursache hierfür ist die verminderte kontinuierliche Regeneration des SCR-Partikelfilters 15 durch die Konkurrenzreaktion des eingeleiteten Ammoniaks mit Stickstoffdioxid. Sofern eine unterstöchiometrische Menge an wässriger Harnstofflösung in den Abgasstrang 7 eingeleitet wird, nimmt die Partikel-Beladung des SCR-Partikelfilters 15 wieder ab. Das Diagramm 29 zeigt somit deutlich, dass die kontinuierliche Regeneration des SCR-Partikelfilters 15 durch die Einleitung von zu großen Mengen an Ammoniak in den Abgasstrang 7 gestört wird.

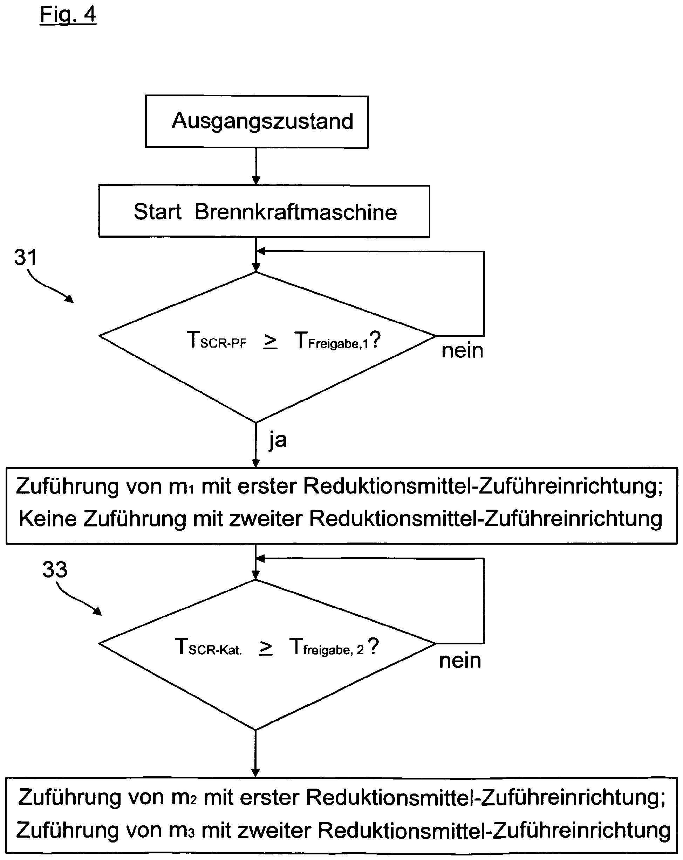

Des Weiteren werden die mittels der Reduktionsmittel-Zuführeinrichtungen 22, 26 in den Abgasstrang 7 eingeleiteten Reduktionsmittel-Mengen hier in Abhängigkeit von der Temperatur des SCR-Partikelfilters 15 sowie in Abhängigkeit von der Temperatur des SCR-Katalysatorelements 19 mittels des Steuergeräts 25 geregelt bzw. gesteuert. Diese Regelung bzw. Steuerung wird nachfolgend anhand von Fig. 4 näher erläutert:
In einem Ausgangszustand ist die Brennkraftmaschine 5 hier beispielhaft ausgeschaltet. Dabei wird keine wässrige Harnstofflösung in den Abgasstrang 7 eingeleitet. Nach einem Starten der Brennkraftmaschine 5 wird in einem Schritt 31 überprüft, ob die Temperatur des SCR-Partikelfilters 15 T_{SCR-PF} größer oder gleich einer ersten Freigabetemperatur T_{Freigabe,1} ist. Die Freigabetemperatur T_{Freigabe,1} ist hier beispielhaft geringer als eine SCR-Anspringtemperatur des SCR-Partikelfilters 15, ab der mittels des SCR-Partikelfilters 15 in dem Abgas 9 enthaltene Stickoxide reduzierbar sind bzw. ab der der SCR-Partikelfilter 15 seine Betriebstemperatur zur Reduzierung der Stickoxide erreicht.

Sofern die Temperatur des SCR-Partikelfilters 15 T_{SCR-PF} größer oder gleich der Freigabetemperatur T_{Freigabe,1} ist, wird mittels der ersten Reduktionsmittel-Zuführeinrichtung 22 ein erster definierter Massenstrom m₁ von wässriger Harnstofflösung in den Abgasstrang 7 eingeleitet. Der erste definierte Massenstrom m₁ ist dabei derart bemessen, dass im Bereich der ersten Reduktionsmittel-Zuführeinrichtung 22 ein im Wesentlichen stöchiometrisches Reduktionsmittel-Stickoxid-Verhältnis vorhanden ist. Mittels der zweiten Reduktionsmittel-Zuführeinrichtung 26 wird dabei weiterhin keine wässrige Harnstofflösung in den Abgasstrang 7 eingeleitet.

Anschließend wird in einem Schritt 33 überprüft, ob die Temperatur des SCR-Katalysatorelements 19 T_{SCR-Kat.} größer oder gleich einer zweiten Freigabetemperatur T_{Freigabe,2} ist. Die Freigabetemperatur T_{Freigabe,2} ist hier beispielhaft ebenfalls geringer als eine SCR-Anspringtemperatur des SCR-Katalysatorelements 19, ab der mittels des SCR-Katalysatorelements 19 in dem Abgas 9 enthaltene Stickoxide reduzierbar sind bzw. ab der der SCR-Partikelfilter 15 seine Betriebstemperatur zur Reduzierung der Stickoxide erreicht.

Sofern die Temperatur des SCR-Katalysatorelements 19 T_{SCR-Kat.} größer oder gleich der Freigabetemperatur T_{Freigabe,2} ist, wird mittels der ersten Reduktionsmittel-Zuführeinrichtung 22 ein zweiter definierter Massenstrom m₂ von wässriger Harnstofflösung in den Abgasstrang 7 eingeleitet. Der zweite definierte Massenstrom m₂ ist dabei derart bemessen, dass im Bereich der ersten Reduktionsmittel-Zuführeinrichtung 22 eine geringere Reduktionsmittel-Menge vorhanden ist als für stöchiometrisches Reduktionsmittel-Stickoxid-Verhältnis erforderlich ist. Mittels der zweiten Reduktionsmittel-Zuführeinrichtung 26 wird dann ein dritter definierter Massenstrom m₃ von wässriger Harnstofflösung in den Abgasstrang 7 eingeleitet. Der dritte definierte Massenstrom m₃ ist dabei derart bemessen, dass im Bereich der zweiten Reduktionsmittel-Zuführeinrichtung 26 ein im Wesentlichen stöchiometrisches Reduktionsmittel-Stickoxid-Verhältnis vorhanden ist.

Durch diese Regelung bzw. Steuerung der Reduktionsmittel-Zuführeinrichtungen 22, 26 kann das Abgas 9 der Brennkraftmaschine 9 besonders effizient gereinigt werden.

### Bezugszeichenliste

- 1: Fahrzeug
- 3: Vorrichtung
- 5: Brennkraftmaschine
- 7: Abgasstrang
- 9: Abgas
- 11: Oxidationskatalysator
- 13: Reduktionsmittel-Einleitbereich
- 15: SCR-Partikelfilter
- 17: Reduktionsmittel-Einleitbereich
- 19: SCR-Katalysatorelement
- 21: Harnstoff-Tank
- 22: Reduktionsmittel-Zuführeinrichtung
- 23: Pumpe
- 24: Durchgangsventil
- 25: Steuergerät
- 26: Reduktionsmittel-Zuführeinrichtung
- 27: Pumpe
- 28: Durchgangsventil
- 29: Diagramm
- 31: Schritt
- 33: Schritt
- m₁: erster Massenstrom
- m₂: zweiter Massenstrom
- m₃: dritter Massenstrom
- t: Zeit
- t₀: Start-Zeitpunkt
- t₁: erster Zeitpunkt
- t₂: zweiter Zeitpunkt
- t₃: dritter Zeitpunkt
- T_{Freigabe1}: erste Freigabetemperatur
- T_{Freigabe2}: zweite Freigabetemperatur
- T_{SCR-PF}: Temperatur SCR-Partikelfilter
- T_{SCR-Kat.}: Temperatur SCR-Katalysatorelement

## Patentansprüche

1. Verfahren zum Betreiben eines Abgasnachbehandlungssystems für eine Brennkraftmaschine, wobei ein Abgasstrang (7) mit wenigstens einem SCR-Partikelfilter (15) vorgesehen ist, wobei mittels des SCR-Partikelfilters (15) in einem Abgas (9) der Brennkraftmaschine (5) enthaltene Partikel aus dem Abgas (9) herausfilterbar und speicherbar sind, wobei mittels des SCR-Partikelfilters (15) in dem Abgas (9) der Brennkraftmaschine (5) enthaltene Stickoxide mit Ammoniak als Reduktionsmittel reduzierbar sind, wobei eine erste Reduktionsmittel-Zuführeinrichtung (22) vorgesehen ist, mittels der das Reduktionsmittel, in Abgas-Strömungsrichtung gesehen, stromauf des SCR-Partikelfilters (15) in den Abgasstrang (7) einleitbar ist, wobei der SCR-Partikelfilter (15) mit Stickstoffdioxid als Oxidationsmittel kontinuierlich regenerierbar ist, wobei stromab des SCR-Partikelfilters (15) wenigstens ein SCR-Katalysatorelement (19) angeordnet ist, mittels dem ebenfalls in dem Abgas (9) der Brennkraftmaschine (5) enthaltene Stickoxide mit Ammoniak als Reduktionsmittel reduzierbar sind, und wobei eine zweite Reduktionsmittel-Zuführeinrichtung (26) vorgesehen ist, mittels der das Reduktionsmittel stromab des SCR-Partikelfilters (15) und stromauf des SCR-Katalysatorelements (19) in den Abgasstrang (7) einleitbar ist, wobei ein Steuergerät (25) vorgesehen ist, mittels dem die mittels der ersten Reduktionsmittel-Zuführeinrichtung (22) in den Abgasstrang (7) eingeleitete Reduktionsmittel-Menge in Abhängigkeit von der Temperatur (T_{SCR-PF}) des SCR-Partikelfilters (15) geregelt und/oder gesteuert wird, **dadurch gekennzeichnet,**
**dass**, sofern die aktuelle Temperatur (T_{SCR-PF}) des SCR-Partikelfilters (15) einen definierten Partikelfilter-Temperaturwert (T_{Freigabe,1}) unterschreitet, mittels der ersten Reduktionsmittel-Zuführeinrichtung (22) kein Reduktionsmittel in den Abgasstrang (7) eingeleitet wird, wobei, sofern die aktuelle Temperatur (T_{SCR-PF}) des SCR-Partikelfilters (15) den definierten Partikelfilter-Temperaturwert (T_{Freigabe,1}) überschreitet, mittels der ersten Reduktionsmittel-Zuführeinrichtung (22) eine definierte Reduktionsmittel-Menge (m₁, m₂) in den Abgasstrang (7) eingeleitet wird, und
**dass** der definierte Partikelfilter-Temperaturwert (T_{Freigabe,1}) geringer ist als eine SCR-Anspringtemperatur des SCR-Partikelfilters (15), ab der in dem Abgas (9) enthaltenen Stickoxide mittels des SCR-Partikelfilters (15) reduzierbar sind.

2. Verfahren nach Anspruch 1, **dadurch gekennzeichnet, dass** die SCR-Anspringtemperatur des SCR-Partikelfilters (15) in einem Temperaturbereich von 220°C bis 250°C liegt.

3. Verfahren nach einem der vorhergehenden Ansprüche, **dadurch gekennzeichnet, dass** mittels des Steuergeräts (25) die mittels der ersten Reduktionsmittel-Zuführeinrichtung (22) und/oder die mittels der zweiten Reduktionsmittel-Zuführeinrichtung (26) in den Abgasstrang (7) eingeleitete Reduktionsmittel-Menge zusätzlich auch in Abhängigkeit von der Temperatur (T_{SCR-Kat.}) des SCR-Katalysatorelements (19) geregelt und/oder gesteuert wird.

4. Verfahren nach Anspruch 3, **dadurch gekennzeichnet, dass**, sofern die aktuelle Temperatur (T_{SCR-Kat.}) des SCR-Katalysatorelements (19) einen definierten Katalysatorelement-Temperaturwert (T_{Freigabe,2}) unterschreitet, mittels der zweiten Reduktionsmittel-Zuführeinrichtung (26) kein Reduktionsmittel in den Abgasstrang (7) eingeleitet wird, wobei, sofern die aktuelle Temperatur (T_{SCR-Kat.}) des SCR-Partikelfilters (19) den definierten Katalysatorelement-Temperaturwert (T_{Freigabe,2}) überschreitet, mittels der zweiten Reduktionsmittel-Zuführeinrichtung (26) eine definierte Reduktionsmittel-Menge (m₃) in den Abgasstrang (7) eingeleitet wird.

5. Verfahren nach Anspruch 4, **dadurch gekennzeichnet, dass** der definierte Katalysatorelement-Temperaturwert (T_{Freigabe,2}.) geringer ist als eine SCR-Anspringtemperatur des SCR-Katalysatorelements (19), ab der in dem Abgas (9) enthaltene Stickoxide mittels des SCR-Partikelfilters (15) reduzierbar sind, wobei bevorzugt vorgesehen ist, dass die SCR-Anspringtemperatur des SCR-Katalysatorelements (19) in einem Temperaturbereich von 220°C bis 250°C liegt.

6. Verfahren nach einem der vorhergehenden Ansprüche, **dadurch gekennzeichnet, dass** der definierte Partikelfilter-Temperaturwert (T_{Freigabe,1}) und/oder der definierte Katalysatorelement-Temperaturwert (T_{Freigabe,2}) in einem Temperaturbereich von 150°C bis 190°C liegt.

7. Verfahren nach einem der vorhergehenden Ansprüche, **dadurch gekennzeichnet, dass**, sofern die aktuelle Temperatur (T_{SCR-PF}) des SCR-Partikelfilters (15) den definierten Partikelfilter-Temperaturwert (T_{Freigabe,1}) überschreitet und die aktuelle Temperatur (T_{SCR-Kat.}) des SCR-Katalysatorelements (19) den definierten Katalysatorelement-Temperaturwert (T_{Freigabe,2}) unterschreitet, eine derartige Menge (m₁) an Reduktionsmittel mittels der ersten Reduktionsmittel-Zuführeinrichtung (22) in den Abgasstrang (7) eingeleitet wird, dass im Bereich der ersten Reduktionsmittel-Zuführeinrichtung (22) ein im Wesentlichen stöchiometrisches Reduktionsmittel-Stickoxid-Verhältnis vorhanden ist.

8. Verfahren nach einem der vorhergehenden Ansprüche, **dadurch gekennzeichnet, dass**, sofern die aktuelle Temperatur (T_{SCR-PF}) des SCR-Partikelfilters (15) den definierten Partikelfilter-Temperaturwert (T_{Freigabe,1}) überschreitet und die aktuelle Temperatur des SCR-Katalysatorelements (19) den definierten Katalysatorelement-Temperaturwert (T_{Freigabe,2}) überschreitet, eine derartige Menge (m₂) an Reduktionsmittel mittels der ersten Reduktionsmittel-Zuführeinrichtung (22) in den Abgasstrang (7) eingeleitet wird, dass im Bereich der ersten Reduktionsmittel-Zuführeinrichtung (22) eine geringere Reduktionsmittel-Menge vorhanden ist, als für ein stöchiometrisches Reduktionsmittel-Stickoxid-Verhältnis erforderlich ist, insbesondere 50% bis 80% der für ein stöchiometrisches Reduktionsmittel-Stickoxid-Verhältnis erforderlichen Reduktionsmittel-Menge vorhanden sind.

9. Verfahren nach einem der vorhergehenden Ansprüche, **dadurch gekennzeichnet, dass**, sofern die aktuelle Temperatur (T_{SCR-PF}) des SCR-Partikelfilters (15) den definierten Partikelfilter-Temperaturwert (T_{Freigabe,1}) überschreitet und die aktuelle Temperatur (T_{SCR-Kat.}) des SCR-Katalysatorelements (19) den definierten Katalysatorelement-Temperaturwert (T_{Freigabe,2}) überschreitet, eine derartige Menge (m₃) an Reduktionsmittel mittels der zweiten Reduktionsmittel-Zuführeinrichtung (26) in den Abgasstrang (7) eingeleitet wird, dass im Bereich der zweiten Reduktionsmittel-Zuführeinrichtung (26) ein im Wesentlichen stöchiometrisches Reduktionsmittel-Stickoxid-Verhältnis vorhanden ist.

10. Verfahren nach einem der vorhergehenden Ansprüche, **dadurch gekennzeichnet, dass** stromauf des SCR-Partikelfilters (15) wenigstens ein Oxidationskatalysator (11) angeordnet ist, mittels dem in dem Abgas (9) der Brennkraftmaschine (5) enthaltenes Stickstoffmonoxid zu Stickstoffdioxid oxidierbar ist.

11. Verfahren nach einem der vorhergehenden Ansprüche, **dadurch gekennzeichnet, dass** wenigstens ein Stickoxid-Speicherelement angeordnet ist, mittels dem in dem Abgas (7) enthaltene Stickoxide in Abhängigkeit von der Abgastemperatur speicherbar und freigebbar sind, wobei bevorzugt vorgesehen ist, dass das Stickoxid-Speicherelement als Speichermaterial Bariumnitrat und/oder Ceroxid enthält.

12. Verfahren nach einem der vorhergehenden Ansprüche, **dadurch gekennzeichnet, dass** der SCR-Partikelfilter (15) und/oder das SCR-Katalysatorelement (19) als SCR-katalytisches Material Kupfer und/oder Vanadium und/oder wenigstens ein Zeolith-Material enthält.

13. Vorrichtung zur Durchführung eines Verfahrens nach einem der vorhergehenden Ansprüche, mit einer Brennkraftmaschine (5) und einem Abgasstrang (7), wobei der Abgasstrang (7) wenigstens einen SCR-Partikelfilter (15) aufweist, mittels dem in einem Abgas (9) der Brennkraftmaschine (5) enthaltene Partikel aus dem Abgas (9) herausfilterbar und speicherbar sind, wobei mittels des SCR-Partikelfilters (15) in dem Abgas (9) der Brennkraftmaschine (5) enthaltene Stickoxide mit Ammoniak als Reduktionsmittel reduzierbar sind, wobei eine erste Reduktionsmittel-Zuführeinrichtung (22) vorgesehen ist, mittels der das Reduktionsmittel, in Abgas-Strömungsrichtung gesehen, stromauf des SCR-Partikelfilters (15) in den Abgasstrang (7) einleitbar ist, wobei der SCR-Partikelfilter (15) mit Stickstoffdioxid als Oxidationsmittel kontinuierlich regenerierbar ist, wobei stromab des SCR-Partikelfilters (15) wenigstens ein SCR-Katalysatorelement (19) angeordnet ist, mittels dem ebenfalls in dem Abgas (9) der Brennkraftmaschine (5) enthaltene Stickoxide mit Ammoniak als Reduktionsmittel reduzierbar sind, und wobei eine zweite Reduktionsmittel-Zuführeinrichtung (26) vorgesehen ist, mittels der das Reduktionsmittel stromab des SCR-Partikelfilters (15) und stromauf des SCR-Katalysatorelements (19) in den Abgasstrang (7) einleitbar ist, wobei ein Steuergerät (25) vorgesehen ist, mittels dem die mittels der ersten Reduktionsmittel-Zuführeinrichtung (22) in den Abgasstrang (7) eingeleitete Reduktionsmittel-Menge in Abhängigkeit von der Temperatur (T_{SCR-PF}) des SCR-Partikelfilters (15) regelbar und/oder steuerbar ist, **dadurch gekennzeichnet,**
**dass**, sofern die aktuelle Temperatur (T_{SCR-PF}) des SCR-Partikelfilters (15) einen definierten Partikelfilter-Temperaturwert (T_{Freigabe,1}) unterschreitet, mittels der ersten Reduktionsmittel-Zuführeinrichtung (22) kein Reduktionsmittel in den Abgasstrang (7) eingeleitet wird, wobei, sofern die aktuelle Temperatur (T_{SCR-PF}) des SCR-Partikelfilters (15) den definierten Partikelfilter-Temperaturwert (T_{Freigabe,1}) überschreitet, mittels der ersten Reduktionsmittel-Zuführeinrichtung (22) eine definierte Reduktionsmittel-Menge (m₁, m₂) in den Abgasstrang (7) eingeleitet wird, und
**dass** der definierte Partikelfilter-Temperaturwert (T_{Freigabe,1}) geringer ist als eine SCR-Anspringtemperatur des SCR-Partikelfilters (15), ab der in dem Abgas (9) enthaltenen Stickoxide mittels des SCR-Partikelfilters (15) reduzierbar sind.

14. Fahrzeug, insbesondere Nutzfahrzeug, zur Durchführung eines Verfahrens nach einem der Ansprüche 1 bis 12 und/oder mit einer Vorrichtung nach Anspruch 13.

## Claims

1. A method for the operation of an exhaust gas aftertreatment system for an internal combustion engine, an exhaust tract (7) being provided with at least one SCR particle filter (15), the SCR particle filter (15) serving to filter out from the exhaust gas (9) and to store particles contained in an exhaust gas (9) from the internal combustion engine (5), the SCR particle filter (15) serving to reduce nitrogen oxides contained in the exhaust gas (9) from the internal combustion engine (5) using ammonia as reducing agent, a first reducing agent feed device (22) being provided, which serves for introducing the reducing agent into the exhaust tract (7) upstream of the SCR particle filter (15), viewed in the direction of flow of the exhaust gas, continuous regeneration of the SCR particle filter (15) being possible using nitrogen dioxide as oxidizing agent, at least one SCR catalytic converter element (19) being arranged downstream of the SCR particle filter (15) and serving to reduce nitrogen oxides likewise contained in the exhaust gas (9) from the internal combustion engine (5) using ammonia as reducing agent, and a second reducing agent feed device (26) being provided, which serves for introducing the reducing agent into the exhaust tract (7) downstream of the SCR particle filter (15) and upstream of the SCR catalytic converter element (19), a control unit (25) being provided, which serves for regulating and/or controlling the quantity of reducing agent introduced into the exhaust tract (7) by means of the first reducing agent feed device (22) as a function of the temperature (T_{SCR-PF}) of the SCR particle filter (15), **characterized in that**
no reducing agent is introduced into the exhaust tract (7) by means of the first reducing agent feed device (22) if the actual temperature (T_{SCR-PF}) of the SCR particle filter (15) is lower than a defined particle filter temperature value(T_{Freigabe,1}), a defined quantity of reducing agent (m₁, m₂) being introduced into the exhaust tract (7) by means of the first reducing agent feed device (22) if the actual temperature (T_{SCR-PF}) of the SCR particle filter (15) exceeds the defined particle filter temperature value (T_{Freigabe,1}), and
the defined particle filter temperature value (T_{Freigabe,1}) is lower than a SCR response temperature of the SCR particle filter (15), at which nitrogen oxides contained in the exhaust gas (9) can be reduced by means of the SCR particle filter (15).

2. The method according to Claim 1, **characterized in that** the SCR response temperature of the SCR particle filter (15) lies in a temperature range from 220°C to 250°C.

3. The method according to one of the preceding claims, **characterized in that** in addition the control unit (25) regulates and/or controls the quantity of reducing agent introduced into the exhaust tract (7) by means of the first reducing agent feed device (22) and/or the by means of the second reducing agent feed device (26) also as a function of the temperature (T_{SCR-Kat.}) of the SCR catalytic converter element (19).

4. The method according to Claim 3, **characterized in that** no reducing agent is introduced into the exhaust tract (7) by means of the second reducing agent feed device (26) if the actual temperature (T_{SCR-Kat.}) of the SCR catalytic converter element (19) is lower than a defined catalytic converter element temperature value (T_{Freigabe,2}), a defined quantity of reducing agent (m₃) being introduced into the exhaust tract (7) by means of the second reducing agent feed device (26) if the actual temperature (T_{SCR-Kat.}) of the SCR particle filter (19) exceeds the defined catalytic converter element temperature value (T_{Freigabe,2}).

5. The method according to Claim 4, **characterized in that** the defined catalytic converter element temperature value (T_{Freigabe,2.}) is lower than a SCR response temperature of the SCR catalytic converter element (19), at which nitrogen oxides contained in the exhaust gas (9) can be reduced by means of the SCR particle filter (15), the SCR response temperature of the SCR catalytic converter element (19) preferably lying in a temperature range from 220°C to 250°C.

6. The method according to one of the preceding claims, **characterized in that** the defined particle filter temperature value (T_{Freigabe,1}) and/or the defined catalytic converter element temperature value (T_{Freigabe,2}) lies in a temperature range from 150°C to 190°C.

7. The method according to one of the preceding claims, **characterized in that** if the actual temperature (T_{SCR-PF}) of the SCR particle filter (15) exceeds the defined particle filter temperature value (T_{Freigabe,1}) and the actual temperature (T_{SCR-Kat.}) of the SCR catalytic converter element (19) is lower than the defined catalytic converter element temperature value (T_{Freigabe,2}), such a quantity (m₁) of reducing agent is introduced into the exhaust tract (7) by means of the first reducing agent feed device (22) that a substantially stoichiometric reducing agent-nitrogen oxide ratio prevails in the area of the first reducing agent feed device (22).

8. The method according to one of the preceding claims, **characterized in that** if the actual temperature (T_{SCR-PF}) of the SCR particle filter (15) exceeds the defined particle filter temperature value (T_{Freigabe,1}) and the actual temperature of the SCR catalytic converter element (19) exceeds the defined catalytic converter element temperature value (T_{Freigabe,2}), such a quantity (m₂) of reducing agent is introduced into the exhaust tract (7) by means of the first reducing agent feed device (22) that a quantity of reducing agent smaller than is required for a stoichiometric reducing agent-nitrogen oxide ratio is present in the area of the first reducing agent feed device (22), in particular 50% to 80% of the quantity of reducing agent required for a stoichiometric reducing agent-nitrogen oxide ratio.

9. The method according to one of the preceding claims, **characterized in that** if the actual temperature (T_{SCR-PF}) of the SCR particle filter (15) exceeds the defined particle filter temperature value (T_{Freigabe,1}) and the actual temperature (T_{SCR-Kat.}) of the SCR catalytic converter element (19) exceeds the defined catalytic converter element temperature value (T_{Freigabe,2}), such a quantity (m₃) of reducing agent is introduced into the exhaust tract (7) by means of the second reducing agent feed device (26) that a substantially stoichiometric reducing agent-nitrogen oxide ratio prevails in the area of the second reducing agent feed device (26).

10. The method according to one of the preceding claims, **characterized in that** at least one oxidation catalytic converter (11), by means of which nitrogen monoxide contained in the exhaust gas (9) from the internal combustion engine (5) can be oxidized to form nitrogen dioxide, is arranged upstream of the SCR particle filter (15).

11. The method according to one of the preceding claims, **characterized in that** at least one nitrogen oxide storage element is arranged, by means of which nitrogen oxides contained in the exhaust gas (7) can be stored and released as a function of the exhaust gas temperature, the nitrogen oxide storage element containing barium nitrate and/or cerium oxide as storage material.

12. The method according to one of the preceding claims, **characterized in that** that the SCR particle filter (15) and/or the SCR catalytic converter element (19) contains copper and/or vanadium and/or at least one zeolite material as SCR catalytic material.

13. A device for performing a method according to one of the preceding claims, having an internal combustion engine (5) and an exhaust tract (7), the exhaust tract (7) comprising at least one SCR particle filter (15), which servers to filter out from the exhaust gas (9) and to store particles contained in an exhaust gas (9) from the internal combustion engine (5), the SCR particle filter (15) serving to reduce nitrogen oxides contained in the exhaust gas (9) from the internal combustion engine (5) using ammonia as reducing agent, a first reducing agent feed device (22) being provided, which serves for introducing the reducing agent into the exhaust tract (7) upstream of the SCR particle filter (15), viewed in the direction of flow of the exhaust gas, continuous regeneration of the SCR particle filter (15) being possible using nitrogen dioxide as oxidizing agent, at least one SCR catalytic converter element (19) being arranged downstream of the SCR particle filter (15) and serving to reduce nitrogen oxides likewise contained in the exhaust gas (9) from the internal combustion engine (5) using ammonia as reducing agent, and a second reducing agent feed device (26) being provided, which serves for introducing the reducing agent, into the exhaust tract (7) downstream of the SCR particle filter (15) and upstream of the SCR catalytic converter element (19), a control unit (25) being provided, which serves for regulating and/or controlling the quantity of reducing agent introduced into the exhaust tract (7) by means of the first reducing agent feed device (22) as a function of the temperature (T_{SCR-PF}) of the SCR particle filter (15), **characterized in that**
the defined particle filter temperature value (T_{Freigabe,1}) is lower than a SCR response temperature of the SCR particle filter (15), at which nitrogen oxides contained in the exhaust gas (9) can be reduced by means of the SCR particle filter (15).

14. A vehicle, in particular a commercial vehicle, for implementing a method according to one of Claims 1 to 12 and/or comprising a device according to Claim 13.

## Revendications

1. Procédé de fonctionnement d'un système de post-traitement des gaz d'échappement pour un moteur à combustion interne, dans lequel une ligne d'échappement (7) est dotée d'au moins un filtre à particules SCR (réduction catalytique sélective) (15), dans lequel des particules contenues dans un gaz d'échappement (9) du moteur à combustion interne (5) peuvent être, au moyen du filtre à particules SCR (15), filtrées hors du gaz d'échappement (9) et stockées, dans lequel, au moyen du filtre à particules SCR (15), les oxydes d'azote contenus dans le gaz d'échappement (9) du moteur à combustion interne (5) peuvent être réduits à l'aide d'ammoniac comme agent réducteur, dans lequel un premier dispositif d'alimentation en agent réducteur (22) est prévu, au moyen duquel l'agent réducteur peut être introduit, vu dans le sens d'écoulement du gaz d'échappement, en amont du filtre à particules SCR (15) dans la ligne d'échappement (7), dans lequel le filtre à particules SCR (15) peut être régénéré en continu à l'aide de dioxyde d'azote comme agent d'oxydation, dans lequel, en aval du filtre à particules SCR (15), est disposé au moins un élément de catalyseur SCR (19) au moyen duquel également les oxydes d'azote contenus dans le gaz d'échappement (9) du moteur à combustion interne (5) peuvent être réduits à l'aide d'ammoniac comme agent réducteur, et dans lequel un deuxième dispositif d'alimentation en agent réducteur (26) est prévu, au moyen duquel l'agent réducteur peut être introduit dans la ligne d'échappement (7) en aval du filtre à particules SCR (15) et en amont de l'élément de catalyseur SCR (19), dans lequel un appareil de commande (25) est prévu, au moyen duquel la quantité d'agent réducteur introduite dans la ligne d'échappement (7) au moyen du premier dispositif d'alimentation en agent réducteur (22) est régulée et/ou commandée en fonction de la température (T_{SCR-PF}) du filtre à particules SCR (15), **caractérisé en ce que**
si la température actuelle (T_{SCR-PF}) du filtre à particules SCR (15) passe en dessous d'une valeur définie de température de filtre à particules (T_{Freigabe,1}), aucun agent réducteur n'est introduit dans la ligne d'échappement (7) au moyen du premier dispositif d'alimentation en agent réducteur (22), et si la température actuelle (T_{SCR-PF}) du filtre à particules SCR (15) dépasse la valeur définie de température de filtre à particules (T_{Freigabe,1}), une quantité définie d'agent réducteur (m₁, m₂) est introduite dans la ligne d'échappement (7) au moyen du premier dispositif d'alimentation en agent réducteur (22) et
**en ce que** la valeur définie de température de filtre à particules (T_{Freigabe,1}) est inférieure à une température d'amorçage SCR du filtre à particules SCR (15) à partir de laquelle les oxydes d'azote contenus dans le gaz d'échappement (9) peuvent être réduits au moyen du filtre à particules SCR (15).

2. Procédé selon la revendication 1, **caractérisé en ce que** la température d'amorçage SCR du filtre particules SCR (15) est comprise dans une plage de températures de 220 °C à 250 °C.

3. Procédé selon l'une des revendications précédentes, **caractérisé en ce qu'**au moyen de l'appareil de commande (25), la quantité d'agent réducteur introduite dans la ligne d'échappement (7) au moyen du premier dispositif d'alimentation en agent réducteur (22) et/ou au moyen du deuxième dispositif d'alimentation en agent réducteur (26) est régulée et/ou commandée en outre également en fonction de la température (T_{SCR-Kat.}) de l'élément de catalyseur SCR (19).

4. Procédé selon la revendication 3, **caractérisé en ce que** si la température actuelle (T_{SCR-Kat.}) de l'élément de catalyseur SCR (19) passe en dessous d'une valeur définie de température d'élément de catalyseur (T_{Freigabe,2}), aucun agent réducteur n'est introduit dans la ligne d'échappement (7) au moyen du deuxième dispositif d'alimentation en agent réducteur (26), et si la température actuelle (T_{SCR-Kat.}) du filtre à particules SCR (19) dépasse la valeur définie de température d'élément de catalyseur (T_{Freigabe,2}), une quantité définie d'agent réducteur (m₃) est introduite dans la ligne d'échappement (7) au moyen du deuxième dispositif d'alimentation en agent réducteur (26).

5. Procédé selon la revendication 4, **caractérisé en ce que** la valeur définie de température d'élément de catalyseur (T_{Freigabe,2}) est inférieure à une température d'amorçage SCR de l'élément de catalyseur SCR (19) à partir de laquelle les oxydes d'azote contenus dans le gaz d'échappement (9) peuvent être réduits au moyen du filtre à particules SCR (15), la température d'amorçage SCR de l'élément de catalyseur SCR (19) étant de préférence comprise dans une plage de températures de 220 °C à 250 °C.

6. Procédé selon l'une des revendications précédentes, caractérisé en ce la valeur définie de température de filtre à particules (T_{Freigabe,1}) et/ou la valeur définie de température d'élément de catalyseur (T_{Freigabe,2}) sont comprises dans une plage de température de 150 °C à 190 °C.

7. Procédé selon l'une des revendications précédentes, **caractérisé en ce que** si la température actuelle (T_{SCR-PF}) du filtre à particules SCR (15) dépasse la valeur définie de température de filtre à particules (T_{Freigabe,1}) et la température actuelle (T_{SCR-Kat.}) de l'élément de catalyseur SCR (19) passe en dessous de la valeur définie de température d'élément de catalyseur (T_{Freigabe,2}), une quantité (m₁) d'agent réducteur est introduite dans la ligne d'échappement (7) au moyen du premier dispositif d'alimentation en agent réducteur (22), laquelle quantité est telle qu'un rapport agent réducteur/oxyde d'azote sensiblement stoechiométrique soit présent dans la région du premier dispositif d'alimentation en agent réducteur (22).

8. Procédé selon l'une des revendications précédentes, **caractérisé en ce que** si la température actuelle (T_{SCR-PF}) du filtre à particules SCR (15) dépasse la valeur définie de température de filtre à particules (T_{Freigabe,1}) et la température actuelle de l'élément de catalyseur SCR (19) dépasse la valeur définie de température d'élément de catalyseur (T_{Freigabe,2}), une quantité (m₂) d'agent réducteur est introduite dans la ligne d'échappement (7) au moyen du premier dispositif d'alimentation en agent réducteur (22), laquelle quantité est telle que, dans la région du premier dispositif d'alimentation en agent réducteur (22), il existe une quantité d'agent réducteur inférieure à celle qui est nécessaire pour un rapport agent réducteur/oxyde d'azote stoechiométrique, en particulier une quantité de 50 % à 80 % de la quantité d'agent réducteur nécessaire pour un rapport agent réducteur/oxyde d'azote stoechiométrique.

9. Procédé selon l'une des revendications précédentes, **caractérisé en ce que** si la température actuelle (T_{SCR-PF}) du filtre à particules SCR (15) dépasse la valeur définie de température de filtre à particules (T_{Freigabe,1}) et la température actuelle (T_{SCR-Kat.}) de l'élément de catalyseur SCR (19) dépasse la valeur définie de température d'élément de catalyseur (T_{Freigabe,2}), une quantité (m₃) d'agent réducteur est introduite dans la ligne d'échappement (7) au moyen du deuxième dispositif d'alimentation en agent réducteur (26), laquelle quantité est telle qu'un rapport agent réducteur/oxyde d'azote sensiblement stoechiométrique soit présent dans la région du deuxième dispositif d'alimentation en agent réducteur (26).

10. Procédé selon l'une des revendications précédentes, **caractérisé en ce qu'**en amont du filtre à particules SCR (15) est disposé au moins un catalyseur d'oxydation (11) au moyen duquel le monoxyde d'azote contenu dans le gaz d'échappement (9) du moteur à combustion interne (5) peut être oxydé en dioxyde d'azote.

11. Procédé selon l'une des revendications précédentes, **caractérisé en ce qu'**au moins un élément de stockage d'oxyde d'azote est prévu, au moyen duquel les oxydes d'azote contenus dans le gaz d'échappement (7) peuvent être stockés et libérés en fonction de la température de gaz d'échappement, l'élément de stockage d'oxyde d'azote contenant de préférence, en tant que matière de stockage, du nitrate de baryum et/ou de l'oxyde de cérium.

12. Procédé selon l'une des revendications précédentes, **caractérisé en ce que** le filtre à particules SCR (15) et/ou l'élément de catalyseur SCR (19) contiennent, en tant que matière catalytique SCR, du cuivre et/ou du vanadium et/ou au moins une matière de zéolithe.

13. Dispositif permettant de mettre en oeuvre un procédé selon l'une des revendications précédentes, comprenant un moteur à combustion interne (5) et une ligne d'échappement (7), dans lequel la ligne d'échappement (7) comprend au moins un filtre à particules SCR (15) au moyen duquel les particules contenues dans un gaz d'échappement (9) du moteur à combustion interne (5) peuvent être filtrées hors du gaz d'échappement (9) et stockées, dans lequel, au moyen du filtre à particules SCR (15), les oxydes d'azote contenus dans le gaz d'échappement (9) du moteur à combustion interne (5) peuvent être réduits à l'aide d'ammoniac comme agent réducteur, dans lequel un premier dispositif d'alimentation en agent réducteur (22) est prévu, au moyen duquel l'agent réducteur peut être introduit, vu dans le sens d'écoulement du gaz d'échappement, en amont du filtre à particules SCR (15) dans la ligne d'échappement (7), dans lequel le filtre à particules SCR (15) peut être régénéré en continu à l'aide de dioxyde d'azote comme agent d'oxydation, dans lequel, en aval du filtre à particules SCR (15), est disposé au moins un élément de catalyseur SCR (19) au moyen duquel également les oxydes d'azote contenus dans le gaz d'échappement (9) du moteur à combustion interne (5) peuvent être réduits à l'aide d'ammoniac comme agent réducteur, et dans lequel un deuxième dispositif d'alimentation en agent réducteur (26) est prévu, au moyen duquel l'agent réducteur peut être introduit dans la ligne d'échappement (7) en aval du filtre à particules SCR (15) et en amont de l'élément de catalyseur SCR (19), dans lequel un appareil de commande (25) est prévu, au moyen duquel la quantité d'agent réducteur introduite dans la ligne d'échappement (7) au moyen du premier dispositif d'alimentation en agent réducteur (22) peut être régulée et/ou commandée en fonction de la température (T_{SCR-PF}) du filtre à particules SCR (15), **caractérisé en ce que**
si la température actuelle (T_{SCR-PF}) du filtre à particules SCR (15) passe en dessous d'une valeur définie de température de filtre à particules (T_{Freigabe,1}), aucun agent réducteur n'est introduit dans la ligne d'échappement (7) au moyen du premier dispositif d'alimentation en agent réducteur (22), et si la température actuelle (T_{SCR-PF}) du filtre à particules SCR (15) dépasse la valeur définie de température de filtre à particules (T_{Freigabe,1}), une quantité définie d'agent réducteur (m₁, m₂) est introduite dans la ligne d'échappement (7) au moyen du premier dispositif d'alimentation en agent réducteur (22) et
**en ce que** la valeur définie de température de filtre à particules (T_{Freigabe,1}) est inférieure à une température d'amorçage SCR du filtre à particules SCR (15) à partir de laquelle les oxydes d'azote contenus dans le gaz d'échappement (9) peuvent être réduits au moyen du filtre à particules SCR (15).

14. Véhicule, en particulier véhicule utilitaire, permettant de mettre en oeuvre un procédé selon l'une des revendications 1 à 12 et/ou comprenant un dispositif selon la revendication 13.
